# EUROPEAN PATENT APPLICATION

(11) **EP 1 204 115 A2**
(43) Date of publication of application: **08.05.2002**
(21) Application number: 01126242.5
(22) Date of filing: 05.11.2001
(51) Int. Cl.: G11B 27/10, G11B 27/32, G11B 20/10

(54) **Information reproducing apparatus and information reproducing method**

(30) Priority: 06.11.2000 JP 2000337831
(71) Applicant: Pioneer Corporation, Meguro-ku, Tokyo (JP)
(72) Inventor: Shioya, Sugura, c/o Tokorozawa Koujou, Tokorozawa-shi, Saitama-ken 359-8522 (JP); Obata, Hidehito, c/o Tokorozawa Koujou, Tokorozawa-shi, Saitama-ken 359-8522 (JP); Kono, Matsumi, c/o Tokorozawa-shi Koujou, Tokorozawa-shi, Saitama-ken 359-8522 (JP)
(74) Representative: Bohnenberger, Johannes, Dr.

(57) **Abstract**

A method and an apparatus are provided for reproducing data recorded in a format different from CD, such as recorded in ISO9660 format. Specifically, TOC data is generated from the information of a path table storing directory information of different stages (TOC data generating section 11), and information recorded in a format different from CD is reproduced in accordance with the TOC data (information reproducing section 12).

## Description

### BACKGROUND OF THE INVENTION

### Field of the Invention

The present invention relates to an information reproducing apparatus and an information reproducing method for reproducing data recorded in a format different from that used in CD (compact disc).
The present application claims priority from Japanese Application No. 2000-337831, the disclosure of which is incorporated herein by reference for all purposes.

### Description of the Related Prior Art

There has been known a logical format such as ISO9660 logical file format which can be used for storing a hierarchical structure file in CD-ROM. In detail, ISO9660 logical file format is so formed that disc volume space has been divided into a plurality of logical blocks which are provided with addresses indicated by a series of continuous numbers starting from 0.

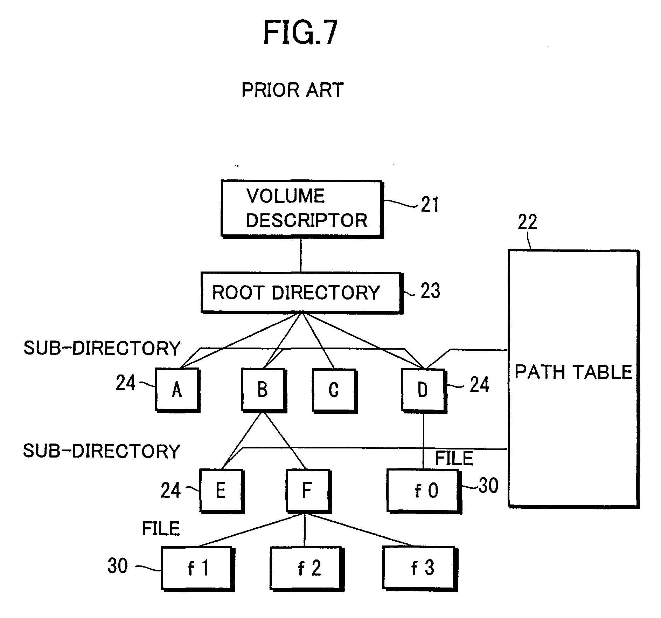

Fig. 7 is a block diagram showing the structure of a logical file of ISO9660 format. In Fig. 7, reference numeral 21 is a volume descriptor storing information concerning logical block address of path table, size of path table, as well as logical block address of root directory, and size of the root directory. In fact, the volume descriptor 21 is fixed in its recording position and its size, serving as a start point of an access to a hierarchical structure file.

Reference numeral 22 is a path table storing information concerning logical block addresses of all directories, sizes of the all directories, as well as a hierarchical structure of the directories. In fact, the path table 22 is variable in its recording position and its size. Reference numeral 23 is a root directory, 24 is a sub-directory, storing information concerning (for example) sizes of files 30... (which serves as unit information existing under the sub-directory. Here, the directory 23 is also variable in its recording position and its size.

In detail, logical file structure of ISO9660 format is characterized in that it has the path table 22 which is in fact an address table storing directory information of various hierarchies, rendering it possible to reduce the number of necessary accesses to a desired file.

Here, the path table 22 is a table containing all directory informations (name and position of each directory, parent directory, all arranged in accordance with a preferential order according to their width) and is for use in searching a directory at a high speed. However, since CD-ROM is slow in seek operation, when sub-directory is searched, a considerable amount of time is necessary in searching (one by one) respective sub-directories separately located in a usual file system. In practice, since the path table usually has one to several sectors, it is allowed to perform a high speed access by performing a constant caching.

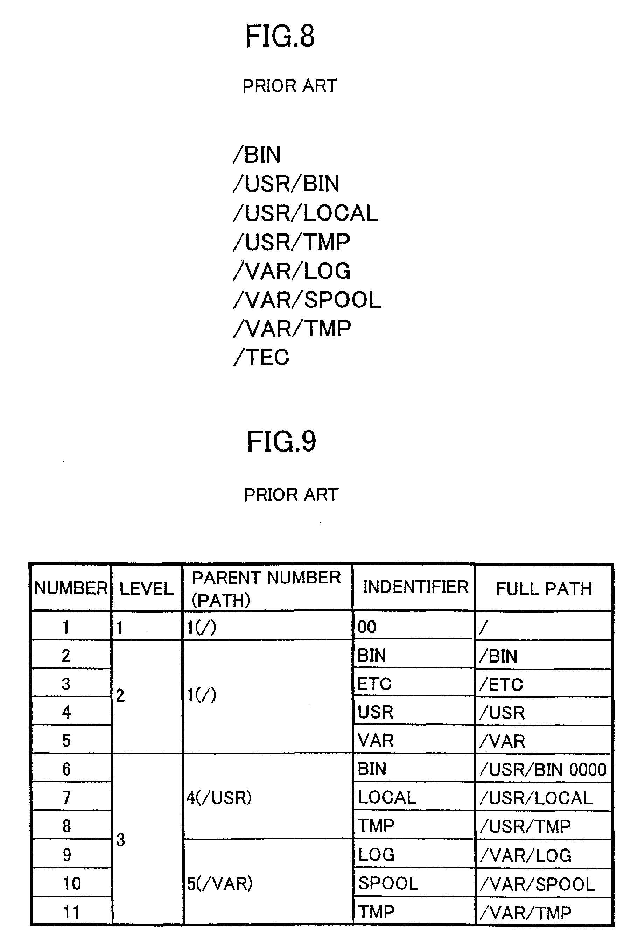

For example, if there are directory hierarchies shown in Fig. 8, the order of path table records will be like that shown in Fig. 9. Here, the front head (No. 1) is constantly a root directory. If a file named as /USR/TMP/README. TXT; 1 is to be searched, an operation procedure will be as follows.

Namely, at first, a root directory is searched from a group of path table records having a level 1. Here, the number is 1. Then, in a group of path table records having a level 2, the number 1 is held as a parent (it is obvious that parent level 2 is root), while a number for searching an identifier called USR is number 4. Further, in a group of path table records having a level 3, number 4 is held as a parent, thereby searching for an identifier called TMP. At this time, the number is 8.

Afterwards, from No. 8 path table record showing /USR/TMP, a position storing the directory main body is obtained, thereby reading out the directory main body. Then, TMP/README. TXT; 1 is searched from a group of the read-out directory records.

In this way, directory searching can be accomplished only by searching a path table from its front head, without having to search each of sub-directories separately dispersed on a disc.

However, when MP3 data recorded in a format such as ISO9660 standard (which is different from that for use in CD) is to be reproduced, and when there is an instruction for searching a song, it is necessary to search out a corresponding address. In order to do this, a conventional method is to assign and record the above path table in specifically determined memory areas. Alternatively, the contents of the path table are recorded in these areas only at the time a song is to be searched.

However, in the above described prior art, since special memory areas are required for storing path table, it is necessary to have a relatively large memory capacity. On the other hand, if a path table is recorded only at the time a song is searched, a relatively long time is needed until a desired song can be searched out. Besides, as to an operation for searching out a song in accordance with a path table, such an operation is different from CD in which a search is performed in accordance with TOC (Table Of Contents). For this reason, when a software for controlling the operation of a reproduction apparatus is prepared, it is also necessary to prepare another software for searching out a song in accordance with a path table. As a result, a large number of man-hours are necessary and this becomes a large burden on soft workers.

### SUMMARY OF THE INVENTION

An object of the present invention is to provide a method of and an apparatus for reproducing information, capable of generating TOC data from path table, reproducing data recorded in a different format from CD in accordance with TOC data, using a software conventionally possessed by a CD player to perform program reproduction and repetition reproduction.

According to the present invention, there is provided an information reproducing apparatus for reproducing information formed by a plurality of unit information recorded in a hierarchical structure, said apparatus comprising an absolute time generation means for generating absolute time information from position information of the unit information; and a reproducing means for reproducing recorded information in accordance with the absolute time information.

In one aspect of the invention, the absolute time generation means is adapted to generate absolute time information of the unit information, in accordance with management information for managing positional information of the unit information.

In another aspect of the invention, the unit information is data prescribed in accordance with ISO9660, the absolute time information is time information corresponding to TOC (Table Of Contents) prescribed in accordance with Red Book.

Further, according to the present invention, there is provided an information reproducing method for reproducing information formed by a plurality of unit information recorded in a hierarchical structure, said method comprising generating absolute time information from position information of the unit information; and reproducing recorded information in accordance with the absolute time information.

With the use of the present invention, by preparing TOC data (which is the same as CD) in accordance with data recorded in a format different from CD, when song data recorded in ISO 9660 CD-ROM format is reproduced, since it is allowed to execute the same functions as provided by CD player when performing program reproduction and repetition reproduction, it is allowed to use the software contained within a conventional CD player (without having to modify the software to any extent). In this way, it is possible to reduce man-hours for making new software, and to provide a user with a convenience as if he or she is using a conventional CD.

### BRIEF DESCRIPTION OF THE DRAWINGS

These and other objects and advantages of the present invention will become clear from the following description with reference to the accompanying drawings, wherein:
Fig. 1 is a block diagram showing an internal constitution of an information reproducing apparatus formed according to the present invention.
Fig. 2 is a flowchart showing an operation of an embodiment of the present invention.
Fig. 3 is a flowchart showing another operation of the embodiment of the present invention.
Fig. 4 is a flowchart showing a further operation of the embodiment of the present invention.
Figs . 5A and 5B are explanatory views showing data structure of directory records for use in explaining an operation of the embodiment of the present invention.
Fig. 6 is an explanatory view showing an example of a conversion into TOC data, as well as an example of ISO9660 file.
Fig. 7 is an explanatory view indicating an example of ISO9660 file shown in Fig. 6, explaining a concrete example of a conversion into TOC data having a logical file structure and recorded in ISO9660 format.
Fig. 8 is a view showing an example of directory hierarchy.
Fig. 9 is used to show an example of a path table record.

### DETAILED DESCRIPTION OF THE PREFERRED EMBODIMENT

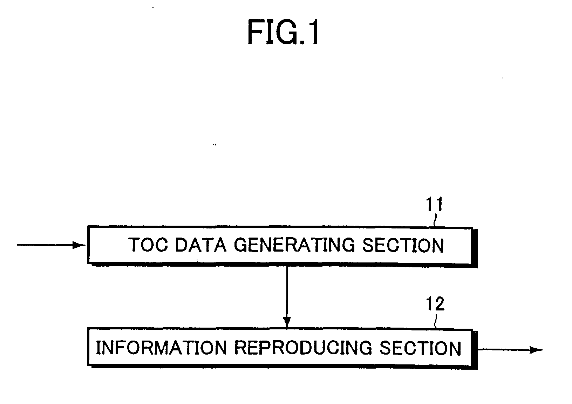

Fig. 1 is a block diagram showing an internal structure of an information reproducing apparatus formed according to the present invention. Here, the information reproducing apparatus comprises a TOC data generating section 11 and an information reproducing section 12.

Actually, the TOC data generating section 11 also serves as an absolute time generating means, and is capable of generating pseudo TOC data in accordance with information recorded in a path table storing directory information (recorded in ISO 9660 format) of various hierarchies. The information reproducing section 12 is provided to reproduce data recorded using data compression technology suitable for recording music contents represented by MP3 (MPG1: Moving Picture Experts Group 1, audio layer III). In fact, such data to be reproduced is that recorded in a format different from CD-ROM and is reproduced in accordance with pseudo TOC data generated by the TOC data generating section 11.

Specifically, the TOC data generating section 11 is formed by using a program of a system controller contained within a CD player, with CPU 12 reading and executing the program. The information reproducing section 12 operates under the control of the system controller to output (through a speaker) data formed by decoding the data read from CD and processing the data in a D/A converter. At this time, the program reproduction and repetition reproduction are also performed, exhibiting the functions for use in reproducing CD.

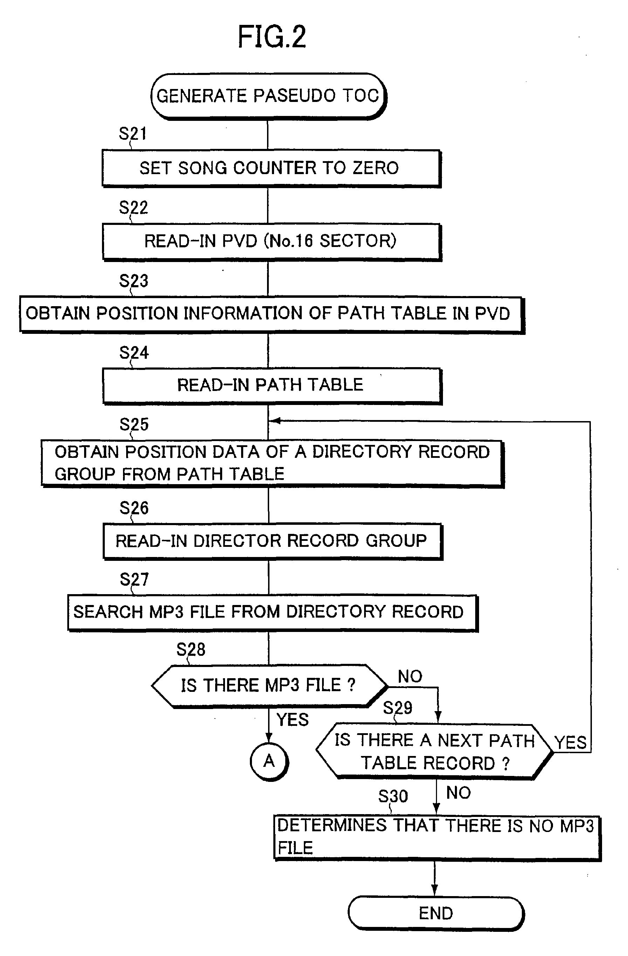

Figs. 2 - 4 are flowcharts showing operations of the reproducing apparatus of the present invention, indicating a first main routine 1, a second main routine 2, and a sub-routine, all for generating TOC data.

Next, detail description will be given to describe the operations of the present embodiment, with reference to Figs. 2 - 4.

At first, the TOC data generating section 11 operates to initialize a song counter contained within the system controller, thereby setting the counter at "0" (step S21). Then, PVD (Primary Volume Descriptor) is read from CD-ROM storing song data in ISO9660 format. Within the Volume, system areas are recorded in addresses "0000"h - "7FFF"h (0 - 15 sectors), while volume descriptors, path table groups, directories and files are recorded in "8000"h - (16 sectors - ). PVD is recorded in the areas of 16 - 17 sectors.

From the PVD obtained in the above, it is allowed to know the position storing the path table, also to know the size of the path table (step S23). Then, the position of the path table is accessed and the above position data as well as size data are read-in (step S24). Here, the path table is formed by preparing and properly arranging path table records relating to all directories within the volume.

In detail, the path table records are those storing the positions of extents (front head address) covering paths extending from a root directory to the respective directories as well as related directories.

Then, position data containing directory records are obtained from the path table records (step S25). In fact, using the position information of the extents within the path table records, it is allowed to know the position storing directory records (serving as management information). Subsequently, directory records are read-in (step S26). In practice, one sector (2048 bytes) of data is read-in.

Directory records are those storing flags indicating the positions of directories or positions of extents of files (all managed by directory records), also indicating whether the above data is file information or directory information.

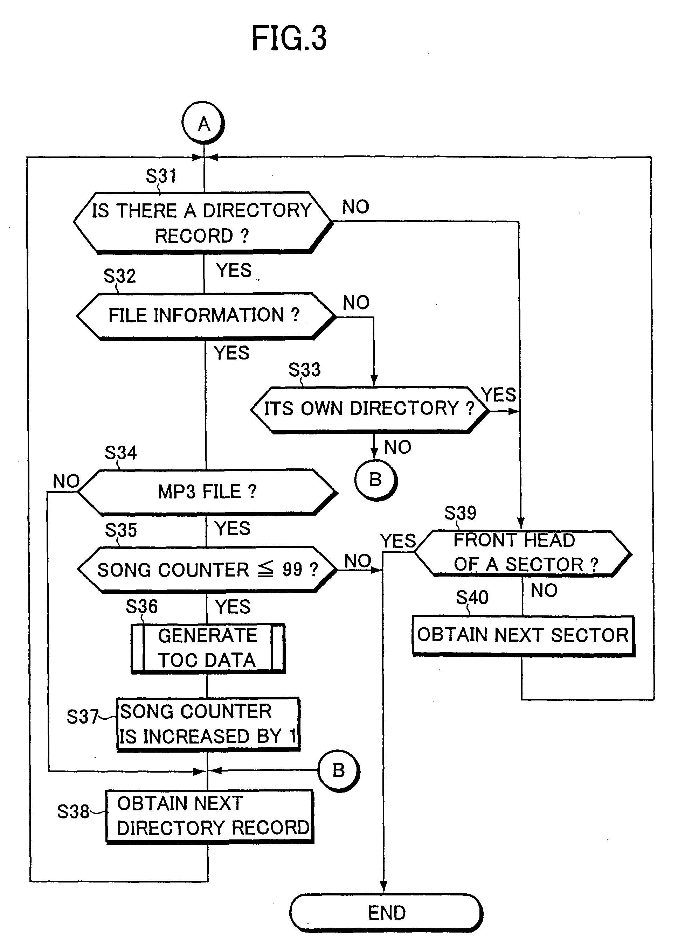

Then, MP3 file is searched out from a directory record (step S27). Actually, file identifier information within the directory record is referred to, thereby searching out an object whose extender is "mp3". Afterwards, it is checked whether MP3 file has been found or not (step S28). If MP3 file has been found, the process goes to step S31 shown in Fig. 3. On the other hand, if the MP3 file has not been found, the process goes to step S29, so as to check whether there is a next path table record.

At this time, it is determined, from the path table read-in at step S24, whether there is a next path table record. If there is such a next path table record, the process goes to step S25. On the other hand, if there is not such a next path table record, it is determined that the disc does not contain MP3 file (step S30), so that the process is terminated.

In a flow chart shown in Fig. 3, at first, it is determined whether there is a directory record (step S31). Actually, it is determined whether length information of directory record is "0" or not. If the length is "0" , it can be determined that there is no directory record information. If the length is not "0", it can be determined that such directory record information is existing, so that the process goes to step S32. If not, the process goes to step S39.

At step S32, it is determined whether the directory record is a file information and such determination may be effected by referring to a file flag within the directory record. If the directory record is a file information, the process proceeds to step S34. On the other hand, if the directory record is a directory information, the process proceeds to step S33. At step S33, it is determined whether the directory record information is "its own directory". Actually, if a file/directory identifier within the directory record is "00", it can be determined that the directory record information is "its own directory".

In this way, if the directory record information is "its own directory", the process goes to step S39. If not, the process goes to step S38. Here, "its own directory" means an initial directory record in certain directory.

At step S34, it is checked whether the above file information is an MP3 file. Here, file identifier information within the directory record is referred, thereby determining whether an extender is an "MP3". If it is an MP3 file, the process goes to step S35. if it is not an MP3 file, the process goes to step S38.

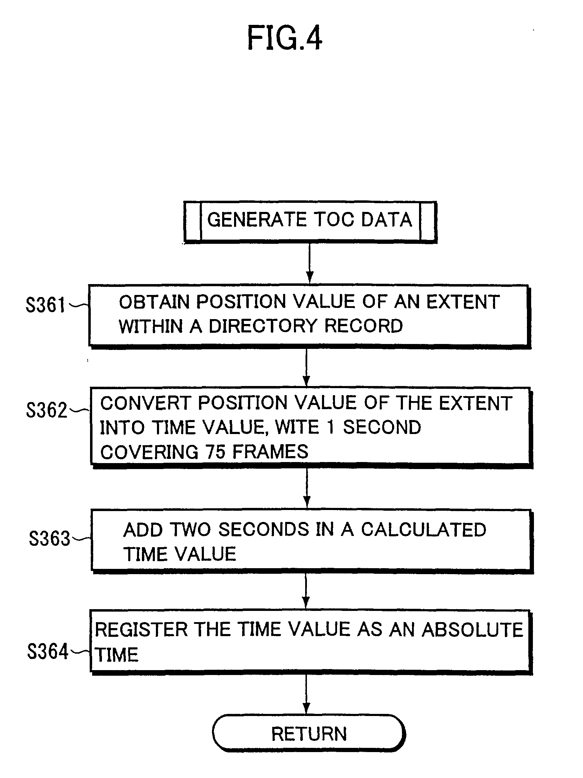

At step S35, it is checked whether a song counter is "99" or lower. This is because Red Book (which is a standard of CD) requires that one CD contain 99 or fewer songs. If the song counter indicates a number of "99" or less, TOC data is prepared at step S36. On the other hand, it the number is "100" or more, the process is ended. Specifically, TOC data can be prepared at step S36, in accordance with a flowchart shown in Fig. 4.

Namely, at first, it is required to detect the position of an extent within the directory record, i.e., LBN of front head of unit information managed by the directory record, and to convert a value of the position of the extent into a time value, with one second serving as 75 frames (step S361 and step S362). Then, two seconds are added in the calculated time value (a similar practice when authoring is performed on a video tape), thereby producing TOC data by registering the time value as an absolute time (steps S363, S364).

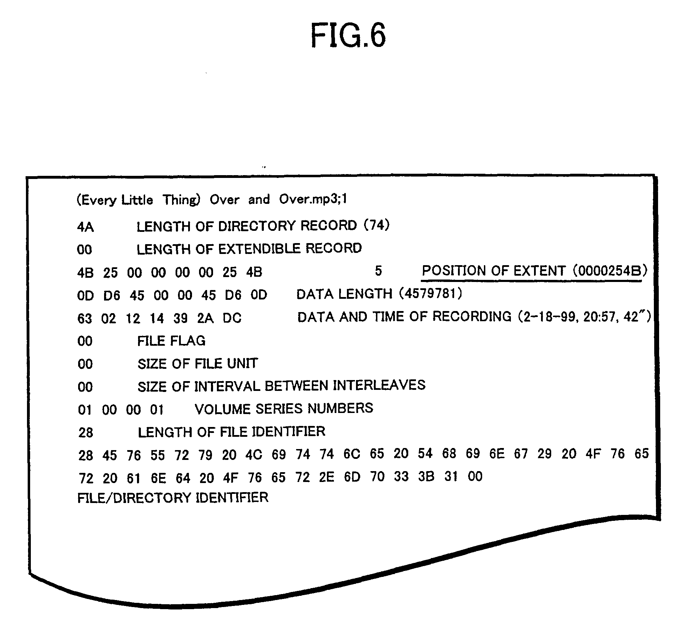

Namely, since the sub-code frame size of CD is the same as the block size of CD-ROM, if LBN (position of extent) of certain point within CD-ROM is used as the number of sub-code frames and converted into a time value (in which two seconds are then added), it is possible to obtain an absolute time extending from the inmost circumference of CD.
Some detailed examples of conversion into the TOC data will be described below by explaining a directory record within ISO9660 file shown in Fig. 6. Here, the position of an extent is acquired, and this is used as the number of sub-code frames of CD and two seconds are converted into a total frame time, followed by adding the above data ("0000254B" h) in the total frame time.
In other words, since one second can cover 75 frames, the total frame time of two seconds can cover "96" h frames. Therefore, "254B" h + "96" h becomes a "251E1" h frames. When this is converted into a time unit (hour, minute, second), it will become "25E1" h/75= 129 + 22, thereby becoming 2 minutes and 9 seconds and 22 frames. This data is than stored in the TOC area.

Referring again to Fig. 3, at step S37, the song counter is increased by 1. Then, at step S38, a next directory record is obtained. In fact, such a next directory record is obtained from a directory record group read-in at step S36. The position of the next directory record can be known from the length information of the directory record inside the present directory record.

Then, at step S39, it is checked whether the position of the directory record is the front head of a sector. In fact, this can be known from the present address information, in the form of "1 sector/2048 byte. If it is the front head of a sector, the process is ended. If not, directory record group of a next sector is read-in (step S40).
However, information of one directory record group isn't always within one sector. If information of one directory record group can not be received within one sector, continued information can be stored in a next sector. But, ISO9660 format fails to record information of one directory record over boundaries between sectors.

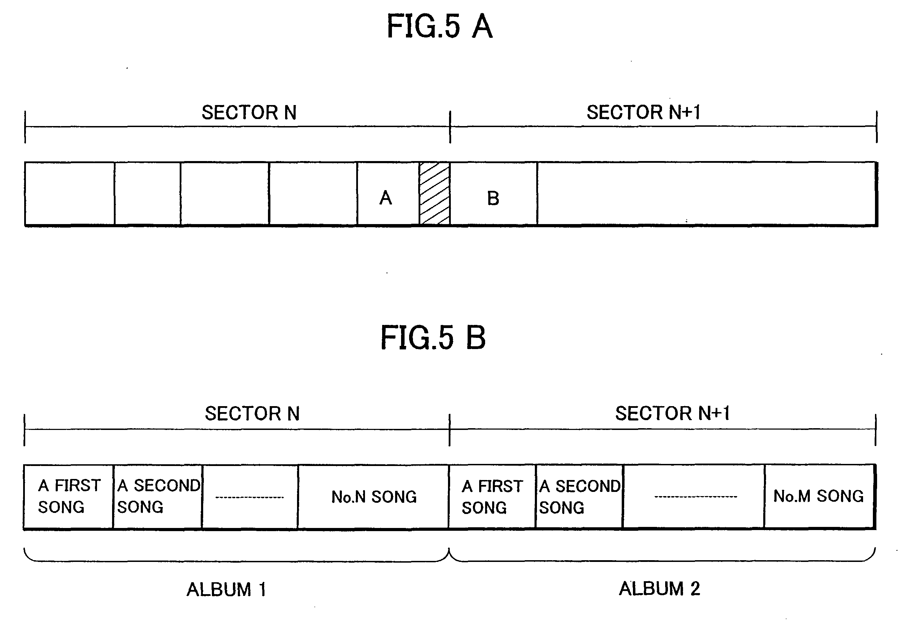

Therefore, as shown in Fig. 5, there is a directory record B in connection with a directory record A recorded in sector N. After directory record A is recorded, if a vacant capacity (hatched portion) of sector N is smaller than the length of directory record B, the directory record B will be recorded in an area starting from the front head of sector N+1.
If it is determined at step S31 that there is no directory record, for example, at a time a directory data next to directory record A (shown in Fig. 5) is about to be obtained, and if this position at this time is not a front head of a sector, it is allowed to assume that there is a next directory record. If, at step S39 it is determined that this is not a front head of a sector, an operation at step S40 will read-in a directory record group of a next sector.

On the other hand, if it is determined at the step S39 that the position of the directory record at this time is the front head of a sector, since there is no directory record existing at the front head of the sector, it is determined that there is no director record next to a final directory record of a former sector, so that the process is ended.

At step S33 it is determined whether information of a directory record is "its own directory". If it is determined that a directory record is "its own directory", this will be an initial directory record in the directory. At this time, it is determined at step S39 whether the position of the directory record at this time is a front head of a sector. If an answer is YES, it is allowed to determine that information of other albums has started in a manner shown in Fig. 5.

Although it has been described in the above that ISO9660 format data may be converted into TOC information of CD, (i.e., converted into absolute time information), the present invention should not be limited to this specific example. In other words, the present invention can be realized in any other embodiments, provided that the position of unit information managed under hierarchical structure can be converted into absolute time.

As described in the above, according to the present invention, if TOC data is generated from the information of the path table and if the data recorded in a format different from CD is reproduced in accordance with the TOC data, it is possible to perform program reproduction and repeat reproduction, allowing the use of software contained within a conventional CD player (without having to modify the software to any extent), thus providing a user with a convenience as if he or she is using a conventional CD.

Therefore, when preparing a software for controlling the operation of the reproducing apparatus, it is not necessary to prepare (in accordance with a path table) other software for carrying out song searching, thereby alleviating a burden on software maker. Further, when reproducing MP3 data recorded in a format different from CD (for example, recorded in accordance with ISO9660 standard), and when there is an instruction for searching a song, it is not necessary to store a path table, nor is it needed to read-in a path table, thereby permitting a high operational speed for the information reproducing apparatus While the invention has been described in conjunction with preferred specific embodiment thereof, it will be understood that this description is intended to illustrate and not limit the scope of the invention, which is defined by the following claims.

## Claims

1. An information reproducing apparatus for reproducing information formed by a plurality of unit information recorded in a hierarchical structure, said apparatus comprising:
an absolute time generation means (11) for generating absolute time information from position information of the unit information; and
a reproducing means (12) for reproducing recorded information in accordance with the absolute time information.

2. An information reproducing apparatus according to claim 1, wherein the absolute time generation means (11) is adapted to generate absolute time information of the unit information, in accordance with management information for managing position information of the unit information.

3. An information reproducing apparatus according to claim 1, wherein the unit information is data prescribed in accordance with ISO9660, the absolute time information is time information corresponding to TOC (Table Of Contents) prescribed in accordance with Red Book.

4. An information reproducing method for reproducing information formed by a plurality of unit information recorded in a hierarchical structure, said method comprising:
generating absolute time information from position information of the unit information; and
reproducing recorded information in accordance with the absolute time information.
